# EUROPÄISCHE PATENTSCHRIFT

(11) **EP 3 038 880 B1**
(45) Veröffentlichungstag und Bekanntmachung des Hinweises auf die Patenterteilung: **20.02.2019**
(21) Anmeldenummer: 14750443.5
(22) Anmeldetag: 08.08.2014
(51) Int. Cl.: B62D 6/10, F16D 1/072

(54) **LENKWELLE FÜR EINE KRAFTFAHRZEUGLENKUNG**
STEERING SHAFT FOR A MOTOR VEHICLE STEERING SYSTEM
ARBRE DE DIRECTION DE VÉHICULE AUTOMOBILE

(30) Priorität: 27.08.2013 DE 102013109284
(43) Veröffentlichungstag der Anmeldung: 06.07.2016
(73) Patentinhaber: ThyssenKrupp Presta AG, 9492 Eschen (LI); thyssenkrupp AG, 45143 Essen (DE)
(72) Erfinder: STROBEL, Joseph-Léon, FL-9493 Mauren (LI); LASS, Eugen, 9435 Heerbrugg (CH); RENGGLI, Patrick, CH-8006 Zürich (CH); KNOLL, Peter, 88131 Lindau (DE); SCHLEGEL, Ulrich, 7304 Maienfeld (CH)
(74) Vertreter: thyssenkrupp Intellectual Property GmbH
(86) Internationale Anmeldenummer: PCT/EP2014/002180
(87) Internationale Veröffentlichungsnummer: WO 2015/028122

(56) Entgegenhaltungen:
- EP-A1- 0 621 168
- EP-A1- 1 429 039
- EP-A2- 1 747 965
- WO-A1-2006/048392
- DE-A1-102011 054 983
- DE-B3- 10 302 072
- FR-A1- 2 365 048
- GB-A- 831 795
- JP-A- 2002 211 422

## Beschreibung

### Technisches Gebiet

Die vorliegende Erfindung betrifft eine Lenkwelle für eine Kraftfahrzeuglenkung zur Verwendung mit einer Hilfskraftunterstützung, umfassend eine Eingangswelle und eine Ausgangswelle, welche zur Übertragung eines Drehmoments mittels eines Drehstabs drehelastisch miteinander verbunden sind, wobei ein Fügeabschnitt des Drehstabes mit einer Fügeaufnahme der Eingangswelle und/oder der Ausgangswelle verbunden ist, wobei der Fügeabschnitt des Drehstabs partielle Erhöhungen zur Ausbildung einer kraft- und formschlüssigen Verbindung mit der Fügeaufnahme der Eingangswelle und/oder der Ausgangswelle aufweist.

### Stand der Technik

Im Bereich von Lenkwellen für Kraftfahrzeuglenkungen ist es bekannt, ein über eine Eingangswelle eingetragenes Drehmoment relativ zu einer Ausgangswelle zu bestimmen und auf dieser Grundlage mittels einer Hilfskraftunterstützung ein Hilfsdrehmoment zur Lenkunterstützung des Fahrers auf die Lenkwelle aufzubringen. Hierzu ist es bei hilfskraftunterstützten Fahrzeuglenkungen bekannt, die Lenkwelle des Kraftfahrzeuges in eine Eingangswelle und eine Ausgangswelle zu unterteilen, wobei die Eingangswelle üblicherweise mit dem Lenkrad des Kraftfahrzeuges verbunden ist, über welches ein Fahrer das entsprechende Lenkdrehmoment beziehungsweise den entsprechenden Lenkbefehl in die Eingangswelle einträgt. Die Ausgangswelle ist üblicherweise mit dem Lenkritzel verbunden, welches über eine entsprechende Zahnstange und Spurstangen die Lenkbewegung auf die gelenkten Räder des Kraftfahrzeugs überträgt.

Hilfskraftunterstützungen, beispielsweise elektrische Hilfskraftunterstützungen oder hydraulische Hilfskraftunterstützungen, werden zum Eintragen der entsprechenden Hilfsdrehmomente üblicherweise an der Ausgangswelle, am Lenkritzel oder an der Zahnstange angesetzt. Die jeweilige Hilfskraftunterstützung wird dabei über die Bestimmung des vom Fahrer über das Lenkrad in die Eingangswelle eingetragenen Drehmoments bezüglich der Ausgangswelle angesteuert.

Hierbei ist es bekannt, die Eingangswelle und die Ausgangswelle einer Lenkwelle mittels eines Drehstabes, welcher auch als Torsionsstab oder "*Torsion Bar"* bezeichnet wird, zu verbinden und über einen Drehmomentsensor das Eingangsdrehmoment aus dem relativen Verdrehwinkel zwischen der Eingangswelle und der Ausgangswelle zu bestimmen. Bei einer hydraulischen Servolenkung kann dies beispielsweise über ein Drehschieberventil stattfinden, bei einer elektrischen Servolenkung beispielsweise über entsprechende Magnetsensoren.

Um eine Überlastung des Drehstabes zu verhindern, können die Eingangswelle und die Ausgangswelle über einen losen Formschluss miteinander verbunden sein, derart, dass ein direktes formschlüssiges Eingreifen der Eingangswelle mit der Ausgangswelle beim Überschreiten eines Maximalwerts für die elastische Verdrehung des Drehstabes auftritt.

Die drehsichere Verbindung des Drehstabes mit der Eingangswelle und/oder der Ausgangswelle ist wichtig für das Funktionieren der entsprechenden drehelastischen Verbindung zwischen der Eingangswelle und der Ausgangswelle, welche schlussendlich das Abtasten des Drehmoments ermöglicht. Hierzu wird der Drehstab üblicher Weise mit der Eingangswelle und/oder der Ausgangswelle reibschlüssig verpresst.

Bei der Montage ist dann zu berücksichtigen, dass ein Drehstab üblicherweise knickempfindlich ist und entsprechend ein Einpressen des Drehstabes in eine Fügeaufnahme der Eingangswelle und/oder der Ausgangswelle so erfolgen muss, dass ein Abknicken des Drehstabes verhindert wird.

Die WO 2006/048392 schlägt hierzu vor, ein Ende des Drehstabes beispielsweise mit einer Verzahnung zu versehen, derart, dass sich diese Verzahnung mit axial verlaufenden Zähnen beim Einpressen in axialer Richtung in die entsprechende Fügeaufnahme in der Ausgangswelle eingraben kann.

Die DE 10 2011 054 983 A1 schlägt vor, zwei direkt auf der Mantelfläche des Drehstabes wälzende Wälzlager vorzusehen, welche eine Zentrierung und Führung des Drehstabes beim Verpressen ermöglichen. Der Drehstab weist dabei auf einer Seite eine Kerbverzahnung mit axial ausgerichteten Zähnen auf, welche im geschlossenen zylindrischen Innenprofil der jeweiligen Lenkspindel verpresst wird.

Die EP0621168 zeigt bei einer Lenkwelle eine Verbindung zwischen einem Torsionsstab mit verzahnten Abschnitten zur Verbindung mit einem ersten Rohr bzw. mit einem zweiten Rohr. Die Verzahnung ist gerade ausgebildet und erstreckt sind axial in Längsrichtung des Torsionsstabs. Darstellung der Erfindung

Ausgehend von dem bekannten Stand der Technik ist es eine Aufgabe der vorliegenden Erfindung, eine Lenkwelle anzugeben, welche eine weiter verbesserte Verbindung des Drehstabs mit einer Welle ermöglicht.

Diese Aufgabe wird durch eine Lenkwelle mit den Merkmalen des Anspruchs 1 gelöst. Vorteilhafte Weiterbildungen ergeben sich aus den Unteransprüchen.

Entsprechend wird eine Lenkwelle für eine Kraftfahrzeuglenkung zur Verwendung mit einer Hilfskraftunterstützung vorgeschlagen, umfassend eine Eingangswelle und eine Ausgangswelle, welche zur Übertragung eines Drehmoments mittels eines Drehstabs drehelastisch miteinander verbunden sind, wobei ein Fügeabschnitt des Drehstabes mit einer Fügeaufnahme der Eingangswelle und/oder der Ausgangswelle verbunden ist, bei der der Fügeabschnitt des Drehstabs partielle Erhöhungen zur Ausbildung einer kraft- und formschlüssigen mit der Fügeaufnahme der Eingangswelle und/oder der Ausgangswelle aufweist, wobei die partiellen Erhöhungen des Fügeabschnitts als durchgehende Ringe oder als durchgehender Gewindegang ausgebildet sind, und dass der Drehstab an seinem der Eingangswelle zugewendeten Ende einen Fügeabschnitt mit partiellen Erhöhungen zur Ausbildung einer kraft- und formschlüssigen Verbindung mit der Fügeaufnahme der Eingangswelle, und an seinem der Ausgangswelle zugewendeten Ende einen Fügeabschnitt mit partiellen Erhöhungen zur Ausbildung einer kraft- und formschlüssige Verbindung mit der Fügeaufnahme der Ausgangswelle aufweist, wobei die partiellen Erhöhungen des Fügeabschnitts durch Materialverdrängung erzielt sind und bevorzugt durch spanloses Umformen, besonders bevorzugt durch Rollieren, Rändeln und/oder Prägen, ausgebildet sind. Erfindungsgemäß weist der Drehstab an seinem der Eingangswelle zugewendeten Ende einen Fügeabschnitt mit partiellen Erhöhungen zur Ausbildung einer kraft- und formschlüssigen Verbindung mit der Fügeaufnahme der Eingangswelle, und an seinem der Ausgangswelle zugewendeten Ende einen Fügeabschnitt mit partiellen Erhöhungen zur Ausbildung einer kraft- und formschlüssige Verbindung mit der Fügeaufnahme der Ausgangswelle auf. Mit anderen Worten ist bevorzugt an beiden Enden des Drehstabs ein Fügeabschnitt vorgesehen. Auf diese Weise können die Vorteile des beschriebenen Fügeprozesses für beide Enden des Drehstabs ausgenutzt werden.

Die durch Materialverdrängung erzielten partiellen Erhöhungen in der Fügeaufnahme sowie am Fügeabschnitt des Drehstabes werden besonders bevorzugt durch Prägen, Rändeln oder Rollieren so aufgebracht, dass das Material des Drehstabes beziehungsweise das Material der jeweiligen Eingangs- und/oder Ausgangswelle im Bereich der Fügeaufnahme fließt und entsprechend so verdrängt wird, dass sich die entsprechenden Erhöhungen ausbilden. Dies wird insbesondere durch ein spanfreies Umformen, wie beispielsweise das genannte Rändeln, Rollieren oder Prägen, erreicht
Durch das Bereitstellen des Fügeabschnitts am Drehstab derart, dass in dem Fügeabschnitt partielle Erhöhungen zur Ausbildung einer kraft- und formschlüssigen Verbindung mit dem Fügeabschnitt des Drehstabs mit der Eingangswelle und/oder der Ausgangswelle vorgesehen sind, kann ein einfaches Fügen des Fügeabschnitts des Drehstabes und der Fügeaufnahme der jeweiligen Eingangs- und/oder Ausgangswelle erreicht werden, welche in einer ausreichend drehfesten Verbindung von Drehstab und Eingangswelle und/oder Ausgangswelle resultiert.

In einer Ausführungsform der Erfindung sind die Fügeaufnahmen der Eingangswelle und/oder der Ausgangswelle zylindrisch ausgebildet.

Bevorzugt erfolgt die Verbindung zwischen dem Drehstab und der Eingangswelle und der Ausgangswelle allein durch die in den Fügeabschnitten der Drehstabes und der Fügeaufnahme der Eingangswelle und der Fügeaufnahme der Ausgangswelle ausgebildeten Oberflächen ohne den Einsatz weiterer Bauteile, wie beispielsweise von Sicherungsstiften, als Verbindungsmittel. Weiter bevorzugt erfolgt die Verbindung zwischen Drehstab und der Eingangswelle und der Ausgangswelle ohne den Einsatz von Klebstoffen, Kitten oder separaten Adhäsionsmitteln.

Bevorzugt sind die partiellen Erhöhungen des Fügeabschnitts durch Materialverdrängung erzielt, besonders bevorzugt durch spanloses Umformen, beispielsweise durch Rollieren, Rändeln und/oder Prägen.

Durch die Verwendung von durch Materialverdrängung erzielten partiellen Erhöhungen im Fügeabschnitt ist eine spanende Bearbeitung des Fügeabschnitts nicht nötig. Durch die entsprechende Bearbeitung des Fügeabschnitts ergibt sich vielmehr, dass der Drehstab mit seinem jeweiligen Fügeabschnitt in die Fügeaufnahme einfach eingepresst werden kann und die entsprechend anzuwendenden Einpresskräfte weit unterhalb der kritischen Knickkraft für den Drehstab liegen. Damit wird es auch möglich, einen Pressverband auf beiden Seiten des Drehstabes herzustellen, nämlich sowohl bezüglich der Fügeaufnahme der Eingangswelle sowie bezüglich der Fügeaufnahme der Ausgangswelle. Auf aufwändige spanende Bearbeitungsschritte zur Herstellung der Fügeaufnahme beziehungsweise des jeweiligen Fügeabschnitts des Drehstabes kann damit verzichtet werden.

In einer bevorzugten Weiterbildung sind die partiellen Erhöhungen als durchgehende Wülste und/oder Ringe, als durchgehender Gewindegang oder als sich in Einpressrichtung entlang des Fügeabschnitts durchgehend erstreckende Rippen ausgebildet. Durch die genannten Ausprägungen von durchgehenden partiellen Erhöhungen lässt sich eine beim Fügen von der jeweiligen Relativposition des Drehstabs bezüglich der Ausgangswelle und/oder Eingangswelle unabhängige Verbindung schaffen, die in jeder beliebigen Drehorientierung miteinander gefügt werden kann und dann in dieser gefügten Drehorientierung eine drehfeste Verbindung bereit stellt. Dies ist besonders vorteilhaft, wenn die Eingangswelle bezüglich der Ausgangswelle in einer vorbestimmten Ausrichtungsposition mittels des Drehstabs verbunden werden soll.

Besonders bevorzugt weist die Fügeaufnahme der Eingangswelle und/oder Ausgangswelle ebenfalls partielle Erhöhungen auf. Beim Fügen des Fügeabschnittes, welcher partielle Erhöhungen aufweist, mit der Fügeaufnahme der Eingangswelle beziehungsweise der Ausgangswelle, welche ebenfalls partielle Erhöhungen aufweist, können die erforderlichen Einpresskräfte weiter reduziert werden. Dabei wird aber durch die Möglichkeit des Fließens des Materials, insbesondere im Bereich der jeweiligen partiellen Erhöhungen, neben einem Kraftschluss auch ein verbesserter Formschluss erzeugt, welcher zu einer entsprechend drehfesten Verbindung führt.

Dabei ist es besonders zu bevorzugen, wenn die Grundform der Fügeaufnahme zylindrisch ist und die partiellen Erhöhungen in die zylindrische Oberfläche eingebracht sind. Die partiellen Erhöhungen sind dabei von zwei Hüllflächen begrenzt eingeschlossen, die jeweils bevorzugt zylindrisch ausgebildet sind. Mit anderen Worten sind die Hüllflächen der partiellen Erhöhungen in der Oberfläche und der entsprechend partiell ausgebildeten Vertiefungen in der Oberfläche jeweils bevorzugt zylindrisch ausgebildet.

Der Formschluss findet dabei zumindest in einer Ebene statt, die senkrecht auf der Einpressrichtung steht. Damit ist eine gute Drehfestigkeit der gefügten Teile gegeben.

Im einfachsten Fall können die partiellen Erhöhungen durch ein Gewinde, das sogar als geschnittenes Gewinde dargestellt sein kann, ausgebildet sein. Allerdings sind auch die partiellen Erhöhungen der Fügeaufnahme bevorzugt durch Materialverdrängung erzielt und bevorzugt durch spanloses Umformen, besonders bevorzugt durch Rollieren, Rändeln und/oder Prägen ausgebildet. Dadurch lassen sich wiederum aufwändige spanende Verfahren vermeiden.

Bevorzugt unterscheiden sich die Ausrichtungen der durch Materialumformung erzielten Erhöhungen in der Fügeaufnahme der jeweiligen Eingangs- beziehungsweise Ausgangswelle und des Fügeabschnitts des Drehstabs. Dabei verlaufen die partiellen Erhöhungen des Drehstabs bevorzugt unter einem Winkel bezüglich der partiellen Erhöhungen in der Fügeaufnahme, und besonders bevorzugt im Wesentlichen senkrecht dazu.

In einer beispielhaften aber nicht beschränkenden Ausbildung ist die Ausrichtung der Erhöhungen im Wesentlichen senkrecht zueinander ausgeprägt. Entsprechend umfasst der Winkelbereich der "im Wesentlichen senkrecht" zueinander ausgerichteten Erhöhungen Werte von 85° bis 95°. Der Winkel kann im Bereich von +/- 10° liegen, besonders bevorzugt im Bereich von +/- 5°.

Beispielsweise können die partiellen Erhöhungen in der Fügeaufnahme durch umlaufende Wülste oder ein Gewinde ausgebildet sein und die partiellen Erhöhungen im Fügeabschnitt des Drehstabes erstrecken sich beispielsweise als Rippen in Axialrichtung beziehungsweise in Einpressrichtung des Drehstabes. In einer alternativen Ausführung können die partiellen Erhöhungen in der Fügeaufnahme axial ausgebildet sein, sich also in der Einpressrichtung erstrecken und die partiellen Erhöhungen im Fügeabschnitt des Drehstabes in Umfangsrichtung verlaufen beziehungsweise ein Gewinde ausbilden.

In den genannten Ausprägungen findet besonders vorteilhaft eine Verringerung der nötigen Einpresskräfte statt, wobei gleichzeitig eine zuverlässige formschlüssige und reibschlüssige Verbindung beim Fügen ausgebildet wird. So lässt sich der Drehstab drehfest mit der Eingangswelle und/oder der Ausgangswelle verpressen, ohne dass die Knickkraft für den Drehstab überschritten wird.

In einer besonders bevorzugten Ausprägung sind sowohl die Eingangswelle als auch die Ausgangswelle so ausgestaltet, dass die jeweilige Fügeaufnahme der Eingangswelle sowie die Fügeaufnahme der Ausgangswelle durch Materialverdrängung erzielte partielle Erhöhung aufweisen, derart, dass der Drehstab zur Ausbildung einer kraftschlüssigen und formschlüssigen Verbindung mit seinen jeweiligen Fügeabschnitten, also insbesondere den an jedem Ende des Drehstabes angeordneten Fügeabschnitten, verbunden werden kann, wobei bei beiden Verbindungen die notwendigen Einpresskräfte beziehungsweise Fügekräfte die Knickkraft des Drehstabes nicht überschreiten beziehungsweise deutlich unterschreiten.

Bevorzugt kann die Einpresskraft auf Werte im Bereich von unter 3000 Newton abgesenkt werden, so dass bei der eigentlichen Montage der Vorrichtung zum Übertragen eines Drehmoments die Knickkraft, welche potentiell auf den Drehstab wirkt, weit unterschritten wird.

In der Fügeaufnahme führen durch Materialverdrängung erzielte partielle Erhöhungen zu einer partiellen Verringerung des Durchmessers der Fügeaufnahme im Bereich der sich in die Fügeaufnahme erstreckenden Erhöhungen, aber auch zu einer partielle Erweiterung des Durchmessers der Fügeaufnahme in den Bereichen des verdrängten Materials gegenüber den ursprünglichen Dimensionen, beispielsweise einer als Bohrung ausgebildeten Fügeaufnahme zur Aufnahme des Drehstabes. Analog findet am Fügeabschnitt des Drehstabes durch das Aufbringen der durch Materialverdrängung erzielten partiellen Erhöhungen eine partielle Aufweitung des Drehstabes bezüglich seines Durchmessers im Bereich der Erhöhungen statt, sowie gleichzeitig in den Bereichen des verdrängten Materials auch eine partielle Verringerung des Durchmessers gegenüber dem Ausgangsdurchmesser. Durch die entsprechende Strukturierung der Fügeaufnahme sowie des Fügeabschnittes kann so erreicht werden, dass beim nachfolgenden Verpressen des Fügeabschnitts in der Fügeaufnahme wiederum ein Fließen des Materials möglich wird, derart, dass zum einen ein kraftschlüssiges Verpressen stattfindet, zum anderen aber aufgrund des Fließens des Materials auch ein Formschluss hergestellt wird, welcher insbesondere dazu führt, dass, neben einer Auszugssicherung, auch eine drehfeste Verbindung zwischen Drehstab und der Eingangswelle und/oder der Ausgangswelle erreicht wird.

Ob das Fließen des Materials vorrangig beim Fügeabschnitt des Drehstabes oder in der Fügeaufnahme der Eingangs- oder Ausgangswelle oder bei beiden gleich stark stattfindet, hängt davon ab, wie sich die jeweiligen Materialhärten zueinander verhalten. Es ist aber vorgesehen, dass das Fließen des Materials durch das Fügen des Drehstabs in die Eingangswelle und/oder die Ausgangswelle nur in den Bereichen der partiellen Erhöhungen des Materials des jeweiligen Fügeabschnitts und der jeweiligen Fügeaufnahme erfolgt. Im bevorzugten Fall, dass die partiellen Materialerhöhungen durch reine Umformung ausgebildet sind, erfolgt das Fließen des Materials zur Einformung nur in den Bereichen des Materials, die zuvor durch die reine Umformung erfasst worden sind. Es ist nicht vorgesehen, die Materialerhöhungen zerspanenend oder umformend in das Grundmaterial der Fügeaufnahme einzupassen, insbesondere einzugraben. Dabei wird die Grenze des Grundmaterials durch die die Materialerhebungen begrenzende Hüllfläche gebildet, die den größeren Durchmesser aufweist.

Die Ausgangsdimensionen der Bohrung der Fügeaufnahme bezüglich des Fügeabschnitts des Drehstabes können so gewählt werden, dass die Fügeaufnahme einen etwas größeren Durchmesser aufweist, als dies beispielsweise bei einer Presspassung vorgesehen wäre, welche ohne die durch Materialverdrängung erzielten partiellen Erhöhungen vorgesehen wäre. Durch die Interaktion der partiellen Erhöhungen des Fügeabschnitts und der Fügeaufnahme kann dennoch eine drehfeste Verbindung erreicht werden. Die dafür benötigten Einpresskräfte sind aber aufgrund der anderen Dimensionen deutlich geringer.

In einer weiteren bevorzugten Ausgestaltung weist der Drehstab einen glatten Zentrierabschnitt auf, der sich an den Fügeabschnitt anschließt, bevorzugt unmittelbar daran anschließt. Durch den Zentrierabschnitt kann eine Montage weiter vereinfacht werden, da insbesondere eine Drehausrichtung der Eingangswelle bezüglich der Ausgangswelle in einer Vormontageposition durchgeführt werden kann und erst nach Einnahme der vorgegebenen Drehposition eine vollständige Verbindung durchgeführt wird.

Um eine maximale Drehbelastung des Drehstabes und der Verbindung des Drehstabes mit der Eingangswelle und der Ausgangswelle nicht zu überschreiten, ist die Eingangswelle bevorzugt mit der Ausgangswelle zusätzlich über einen losen Formschluss verbunden.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Darstellung einer Kraftfahrzeuglenkung mit einer Hilfskraftunterstützung;
- Figur 2: eine schematische perspektivische Darstellung einer Lenkwelle;
- Figur 3: eine schematische perspektivische Explosionsdarstellung der Lenkwelle der Figur 2;
- Figur 4: eine weitere schematische perspektivische Darstellung der Lenkwelle der Figuren 2 und 3 in einem Zwischenmontagezustand;
- Figur 5: eine schematische Querschnittsansicht durch Abschnitte der Lenkwelle der Figuren 2 bis 4 im montierten Zustand;
- Figuren 6 bis 8: schematische Querschnittsansichten durch unterschiedliche Ausbildungen einer Fügeaufnahme;
- Figuren 9 und 10: schematische perspektivische Darstellungen der (nicht beanspruchten) am einen Ende und am anderen
Ende des Drehstabes angebrachten Fügeabschnitte;
- Figur 11: eine schematische Schnittansicht eines Drehstabes eine einer weiteren Ausbildung;
- Figuren 12 und 13: schematische Darstellungen weiterer Ausprägungen des Fügeabschnittes;
- Figur 14: eine schematische Querschnittsansicht einer Fügeaufnahme in einer weiteren Ausbildung;
- Figur 15: eine schematische Schnittansicht eines Drehstabes in noch einer weiteren Ausbildung;
- Figur 16: eine schematische perspektivische Darstellung einer Lenkwelle in einer weiteren Ausbildung; und
- Figuren 17 und 18: schematische Darstellungen einer Lenkwelle mit einem losen Formschluss zwischen einer Eingangswelle und einer Ausgangswelle.

### Detaillierte Beschreibung bevorzugter Ausführungsbeispiele

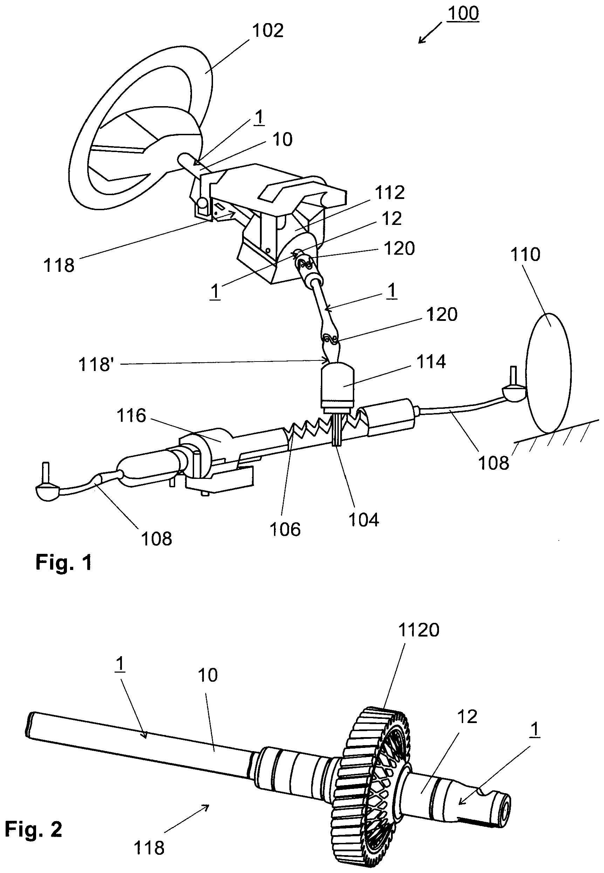

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden. In Figur 1 ist eine schematische Darstellung einer Kraftfahrzeuglenkung 100 gezeigt, wobei ein Fahrer über ein Lenkrad 102 ein entsprechendes Drehmoment als Lenkbefehl in eine Lenkwelle 1 einbringt. Das Drehmoment wird dann über die Lenkwelle 1 auf ein Lenkritzel 104 übertragen, welches mit einer Zahnstange 106 kämmt, die dann ihrerseits über entsprechende Spurstangen 108 den vorgegebenen Lenkwinkel auf die lenkbaren Räder 110 des Kraftfahrzeugs überträgt.

Eine elektrische und/oder hydraulische Hilfskraftunterstützung kann in Form der Hilfskraftunterstützung 112, alternativ auch der Hilfskraftunterstützung 114 beziehungsweise 116, entweder mit der Lenkwelle 1, dem Ritzel 104 beziehungsweise der Zahnstange 106 gekoppelt sein. Die jeweilige Hilfskraftunterstützung 112, 114 oder 116 trägt ein Hilfsdrehmoment in die Lenkwelle 1, das Lenkritzel 104 und/oder eine Hilfskraft in die Zahnstange 106 ein, wodurch der Fahrer bei der Lenkarbeit unterstützt wird. Die drei unterschiedlichen in der Figur 1 dargestellten Hilfskraftunterstützungen 112, 114 und 116 zeigen alternative Positionen für deren Anordnung. Üblicher Weise ist nur eine einzige der gezeigten Positionen mit einer Hilfskraftunterstützung belegt. Das Hilfsdrehmoment oder die Hilfskraft, welches bzw. welche zur Unterstützung des Fahrers mittels der jeweiligen Hilfskraftunterstützung 112, 114 oder 116 aufgebracht werden soll, wird unter Berücksichtigung des vom Drehmomentsensor 118 ermittelten Eingangsdrehmoments bestimmt. Alternativ oder in Kombination mit der Einbringung des Hilfsdrehmomentes bzw. der Hilfskraft kann mit der Hilfskraftunterstützung 112, 114, 116 ein zusätzlicher Lenkwinkel in das Lenksystem eingebracht werden, der sich mit dem vom Fahrer in das Lenkrad 102 eingebrachten Lenkwinkel summiert.

Die Lenkwelle 1 weist eine mit dem Lenkrad 102 verbundene Eingangswelle 10 und eine mit der Zahnstage 106 über das Lenkritzel 104 verbundene Ausgangswelle 12 auf. Die Eingangswelle 10 und die Ausgangswelle 12 sind drehelastisch über einen Drehstab miteinander gekoppelt. Damit führt ein von einem Fahrer über das Lenkrad 102 in die Eingangswelle 10 eingetragenes Drehmoment immer dann zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann beispielsweise über einen Drehwinkelsensor gemessen werden und entsprechend aufgrund der bekannten Torsionssteifigkeit des Drehstabes in ein entsprechendes Eingangsdrehmoment relativ zur Ausgangswelle bestimmt werden. Auf diese Weise wird durch die Bestimmung der Relativdrehung zwischen Eingangswelle 10 und Ausgangswelle 12 der Drehmomentsensor 118 ausgebildet. Ein solcher Drehmomentsensor 118 ist prinzipiell bekannt und kann beispielsweise in Form eines Drehschiebeventils, einer elektromagnetischen Messung der Relativverdrehung oder durch andere Messungen der Relativdrehung realisiert werden.

Damit wird ein Drehmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 hervorrufen, wenn die Ausgangswelle 12 gegen den Drehwiderstand des Drehstabs relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder eine einzutragende Hilfskraft bestimmen zu können.

Die Lenkwelle 1 in der Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann.

Die nachfolgend in den Figuren 2 bis 15 sowie 17 und 18 dargestellten Ausführungsbeispiele der Lenkwelle 1 lassen sich besonders gut mit der in Figur 1 gezeigten Anordnung des Drehmomentsensors 118 in Verbindung mit der Hilfskraftunterstützung 112 verbinden.

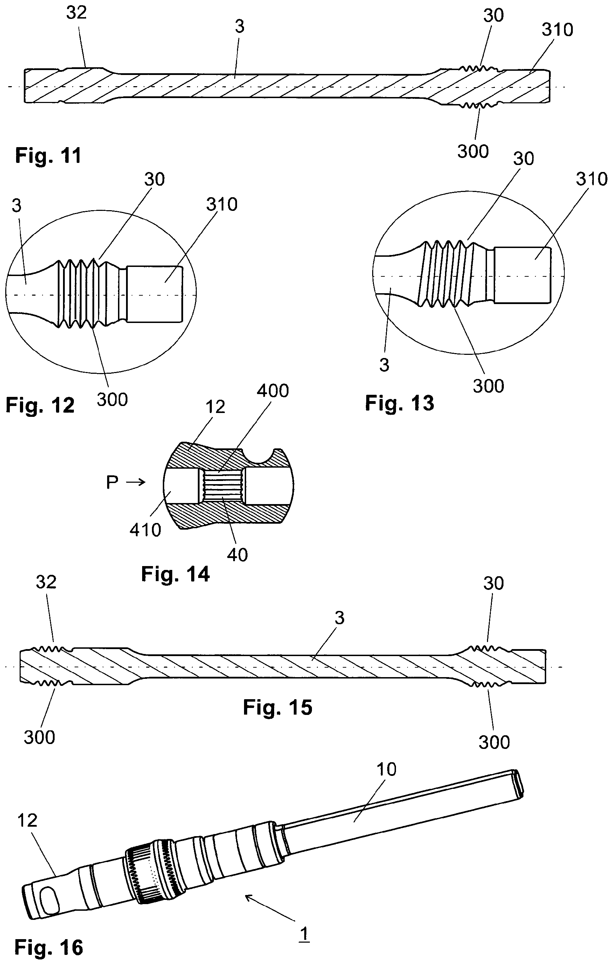

Die in Figur 16 gezeigte Ausführungsform der Lenkwelle 1 ist besonders gut zusammen mit der Anordnung des Drehmomentsensor 118' in Verbindung mit den Hilfskraftunterstützungen 114 beziehungsweise 116 zu verwenden.

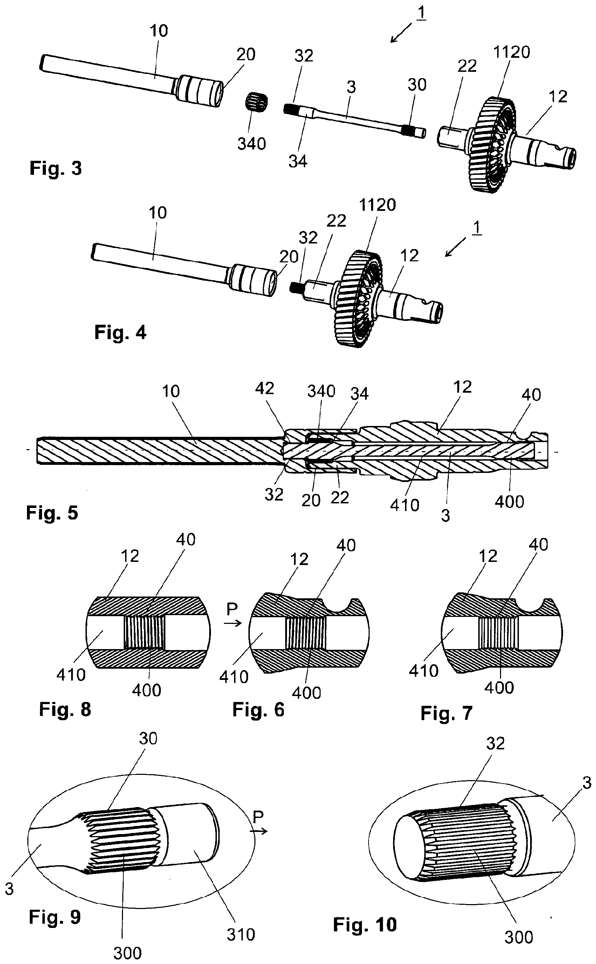

Figur 2 zeigt schematisch eine Lenkwelle 1 mit einer Eingangswelle 10 und einer Ausgangswelle 12, wobei der Bereich des Zusammentreffens der Eingangswelle 10 mit der Ausgangswelle 12 von dem in Figur 1 gezeigten Drehmomentsensor 118 überspannt wird. Die Eingangswelle 10 ist bezüglich der Ausgangswelle 12 drehelastisch über einen in Figur 2 nicht zu erkennenden, sondern intern verlaufenden Drehstab verbunden, wobei der konkrete Aufbau der Lenkwelle 1 in den Figuren 3 bis 5 verdeutlicht wird.

Zum Eintragen des Hilfsdrehmoments durch die Hilfskraftunterstützung 112 ist auf der Ausgangswelle 12 drehfest ein Schneckenzahnrad 1120 vorgesehen. Auf das Schneckenzahnrad 1120 kann entsprechend ein Abtrieb eines Elektromotors beziehungsweise Servomotors der Hilfskraftunterstützung 112 wirken. In einer Alternative kann auch ein hydraulischer Antrieb vorgesehen sein. Die Hilfskraftunterstützung 112 dient entsprechend dazu, das entsprechende Hilfsdrehmoment zur Lenkunterstützung des Fahrers in die Ausgangswelle 12 und damit in sämtliche stromabwärts der Ausgangswelle 12 liegenden Komponenten der Kraftfahrzeuglenkung 100 einzutragen.

Um das entsprechende Drehmoment beziehungsweise den Betrag der über das Schneckenzahnrad 1120 einzubringenden Hilfskraft genau bestimmen zu können, sind, wie bereits oben beschrieben, die Eingangswelle 10 und die Ausgangswelle 12 drehelastisch miteinander verbunden, so dass der jeweilige Lenkbefehl, welcher vom Fahrer über das Lenkrad 102 in die Eingangswelle 10 eingetragen wird, in einer entsprechenden Unterstützung des Fahrers durch die Hilfskraftunterstützung 112, welche auf das Schneckenzahnrad 1120 wirkt, resultiert. Hierzu ist der Drehmomentsensor 118 vorgesehen, welcher die Relativdrehung zwischen der Eingangswelle 10 und der Ausgangswelle 12 beziehungsweise den entsprechenden Relativdrehwinkel zwischen Eingangswelle 10 und Ausgangswelle 12 bestimmt und auf dieser Grundlage das von der Hilfskraftunterstützung 112 bereit zu stellende Hilfsdrehmoment bestimmt werden kann.

In Figur 3 ist eine schematische Explosionsdarstellung der Lenkwelle 1 gezeigt, wobei die Eingangswelle 10 und die Ausgangswelle 12 zusammen mit dem Schneckenzahnrad 1120 gezeigt sind.

Die Eingangswelle 10 weist einen Lagerbereich 20 auf, welcher zur Aufnahme eines dazu komplementären Wellenabschnitts 22 der Ausgangswelle 12 dient. Dies ist in der Schnittdarstellung der Figur 5 noch einmal besonders deutlich zu sehen, wobei der Wellenabschnitt 22 der Ausgangswelle 12 in den Lagerbereich 20 der Eingangswelle 10 eingeführt ist, so dass eine im Prinzip frei drehbare Lagerung der Eingangswelle 10 an der Ausgangswelle 12 resultiert.

Ein Drehstab 3 verbindet die Eingangswelle 10 mit der Ausgangswelle 12 drehelastisch. Diese drehelastische Verbindung der Eingangswelle 10 mit der Ausgangswelle 12 ist in Figur 5 schematisch in einer Schnittdarstellung gezeigt. Der Drehstab weist hierzu an seinem der Ausgangswelle 12 zugewandten Ende einen Fügeabschnitt 30 und an seinem der Eingangswelle 10 zugewandten Ende einen Fügeabschnitt 32 auf. Der der Ausgangswelle 12 zugewendete Fügeabschnitt 30 des Drehstabes 3 ist mit der Ausgangswelle 12 in einer Fügeaufnahme 40 der Ausgangswelle 12 drehfest verbunden. Der der Eingangswelle 10 zugewendeten Fügeabschnitt 32 des Drehstabes 3 ist mit der Eingangswelle 10 in einer Fügeaufnahme 42 der Eingangswelle 10 drehfest verbunden.

Der Drehstab 3 weist in der gezeigten Ausführungsform einen Lagerbereich 34 auf, auf welchen ein Wälzlager 340 so aufgeschoben werden kann, dass, wie sich beispielsweise aus Figur 5 ergibt, der am Fügeabschnitt 30 an der Ausgangswelle 12 drehfest gehaltene Drehstab 3 relativ zu der Ausgangswelle 12 in einer Durchgangsbohrung 410 der Ausgangswelle 12 frei verdrehen kann, wobei das Wälzlager 340 auf der Außenseite des Lagerabschnitts 34 des Drehstabes 3 wälzt.

Die Fügeaufnahme 40 in der Ausgangswelle 12 weist, wie beispielsweise aus Figur 5 zu erkennen, in der Durchgangsbohrung 410 der Ausgangswelle 12 partielle Erhöhungen 400 auf, welche mit dem Fügeabschnitt 30 des Drehstabes 3 in Verbindung stehen. Zur Ausbildung der Verbindung wird beim Fügen des Drehstabes 3 mit der Ausgangswelle 12 der Fügeabschnitt 30 des Drehstabes 12 in die Fügeaufnahme 40 der Ausgangswelle 12 eingepresst.

Die partiellen Erhöhungen 400 sind besonders bevorzugt durch spanloses Umformen erzeugt, bevorzugt durch Materialverdrängung wie beispielsweise durch Prägen, Rollieren oder Rändeln. Die partiellen Erhöhungen 400 sind bei einer in Umfangsrichtung ausgebildeten Erstreckung der jeweiligen Erhöhung 400 bevorzugt als durchgehende Wülste oder Ringe, beziehungsweise als durchgehender Gewindegang beziehungsweise durchgehende Gewindegänge ausgebildet. Bei sich in Axialrichtung, bevorzugt in Einpressrichtung, erstreckenden Erhöhungen 400 erstrecken sich diese bevorzugt durchgehend entlang der ganzen Fügeaufnahme 40.

Weitere mögliche Ausbildungen der Fügeaufnahme 40 sind in den Figuren 6 bis 8 gezeigt, wobei in Figur 6 die Fügeaufnahme 40 mit durch Materialverdrängung erzielten partiellen Erhöhungen 400 versehen ist, welche in Form eines Gewindes in die Durchgangsbohrung 410 der Ausgangswelle 12 eingebracht sind. Diese durch Materialverdrängung erzielten partiellen Erhöhungen 400 in Form des Gewindes können beispielsweise durch Prägen, Rändeln beziehungsweise Rollieren geformt werden, derart, dass eine spanlose Umformung zur Ausbildung der Struktur der Fügeaufnahme 40 dient. Die in Figur 6 gezeigten, durch Materialverdrängung erzielten partiellen Erhöhungen 400 sind im Wesentlichen senkrecht, in einem Bereich von +/- 10°, bevorzugt im Bereich von +/- 5°, zu einer Einpressrichtung P ausgebildet.

In Figur 7 wird eine alternative Ausbildung der Fügeaufnahme 40 beziehungsweise der durch Materialverdrängung erzielten partiellen Erhöhungen 400 der Fügeaufnahme 40 in der Durchgangsbohrung 410 der Ausgangswelle 12 gezeigt, wobei sich die durch Materialverdrängung erzielten partiellen Erhöhungen 400 hier genau in Umfangsrichtung der Durchgangsbohrung 410 erstrecken. Mit anderen Worten handelt es sich hier um sich in Umfangsrichtung der Durchgangsbohrung 410 erstreckende Wülste beziehungsweise Ringe, welche durch Materialverdrängung, also spanlos, in die Durchgangsbohrung 410 eingeformt wurden.

In einer Alternative kann die Struktur der Fügeaufnahme 40 auch durch spanabhebende Verfahren hergestellt werden, beispielsweise durch Fräsen oder Räumen der Fügeaufnahme 40.

Durch die durch Materialverdrängung erzielten partiellen Erhöhungen 400 findet entsprechend eine Verringerung des Innendurchmessers der Durchgangsbohrung 410 im Bereich der Fügeaufnahme 40 statt, wobei die Verringerung des Innendurchmessers zumindest durch die in die Durchgangsbohrung 410 ragenden Bereiche der Erhöhungen 400 erzeugt wird.

In Figur 8 ist noch eine weitere Ausbildung einer Fügeaufnahme 40 gezeigt, wobei die in der Durchgangsbohrung 410 eingebrachten partiellen Erhöhungen 400 gewindeförmig aufgebracht sind, jedoch mit einer anderen Gewindesteigung und in einem anderen Bereich der Ausgangswelle 12, als bei der Fügeaufnahme 40 der Figur 6.

In Figur 4 ist schematisch ein Montagezustand der Lenkwelle 1 gezeigt, in welchem der Drehstab 3 bereits in die Durchgangsbohrung 410 der Ausgangswelle 12 eingefügt ist und der Fügeabschnitt 30 des Drehstabes 3 kraft- und formschlüssig mit der Fügeaufnahme 40 der Ausgangswelle 12 verbunden ist. Entsprechend ragt lediglich noch der andere Fügeabschnitt 32 des Drehstabes 3 aus der Ausgangswelle 12 heraus, so dass in einem nachfolgenden Montageschritt der Wellenabschnitt 22 der Ausgangswelle 12 in den entsprechenden Lagerbereich 20 eingeführt werden kann, wodurch der Fügeabschnitt 32 des Drehstabes 3 in die entsprechende Fügeaufnahme 42 der Eingangswelle 10 eingepresst wird.

In Figur 9 ist der Fügeabschnitt 30 eines nicht beanspruchten Drehstabes 3 in einer detaillierten Ansicht gezeigt. Der Fügeabschnitt 30 weist ebenfalls partielle Erhöhungen 300 auf, welche beim Fügen mit den partiellen Erhöhungen 400 der Fügeaufnahme 40 in Kontakt kommen und beim Einpressen entsprechend ein Fließen des Materials derart hervorrufen, dass eine kraftschlüssige und formschlüssige Verbindung zwischen dem Fügeabschnitt 30 und der Fügeaufnahme 40 hergestellt wird.

Die partiellen Erhöhungen 300 sind besonders bevorzugt durch spanloses Umformen erzeugt, bevorzugt durch Materialverdrängung wie beispielsweise durch Prägen, Rollieren oder Rändeln. Die partiellen Erhöhungen 300 sind bei einer in Umfangsrichtung ausgebildeten Erstreckung der jeweiligen Erhöhung 300 bevorzugt als durchgehende Wülste oder Ringe, beziehungsweise als durchgehender Gewindegang beziehungsweise durchgehende Gewindegänge ausgebildet. Bei sich in Axialrichtung, bevorzugt in Einpressrichtung, erstreckenden Erhöhungen 300 erstrecken sich diese bevorzugt durchgehend entlang des ganzen Fügebereichs 30.

Mit anderen Worten graben sich beim Einpressen des Fügebereichs 30 in die Fügeaufnahme 40 die Erhöhungen 300 in die Erhöhungen 400 ein, so dass unter Aufwendung einer relativ geringen Einpresskraft eine drehfeste Verbindung beim Fügen herstellt wird.

Die durch Materialverdrängung erzielten partiellen Erhöhungen 300 des Fügeabschnitts 30 des Drehstabes 3 erstrecken sich in Einpressrichtung P, also in Axialrichtung des Drehstabes 3. Damit sind die durch Materialverdrängung erzielten partiellen Erhöhungen 300 des Fügeabschnitts 30 im Wesentlichen senkrecht ausgerichtet zu den durch Materialverdrängung erzielten partiellen Erhöhungen 400 in der Fügeaufnahme 40 der Ausgangswelle 12. Diese im Wesentlichen senkrechte Ausrichtung der durch Materialverdrängung erzielten partiellen Erhöhungen 300 des Fügeabschnitts bezüglich der Erhöhungen 400 der Fügeaufnahme 40 tritt auch dann auf, wenn in der Fügeaufnahme 40 eine im Wesentlichen gewindeförmige Struktur der partiellen Erhöhungen 400 vorliegt.

Durch die unter einem Winkel, bevorzugt einem im Wesentlichen rechten Winkel, verlaufenden Erhöhungen 300 und 400 kann beim Fügen des Drehstabs 3 mit der Eingangswelle 10 und/oder der Ausgangswelle 12 eine sehr gute Drehfestigkeit erreicht werden. Dies ist vorteilhaft für die zuverlässige Funktion der drehelastischen Verbindung der Eingangswelle 10 mit der Ausgangswelle 12.

Durch das entsprechende Bereitstellen der partiellen Erhöhungen 300 im Fügeabschnitt 30 sowie der partiellen Erhöhungen 400 in der Fügeaufnahme 40 derart, dass die Erstreckung der Erhöhungen 300, 400 unter einem Winkel und bevorzugt im Wesentlichen senkrecht, in einem Bereich von +/- 10°, bevorzugt von +/- 5°, zueinander ausgerichtet sind, lässt sich ein Formschluss herstellen, da durch ein entsprechendes Fließen des Materials beim Verpressen entsprechende, die Rotation hemmende Strukturen in Rotations- beziehungsweise Umfangsrichtung geschaffen werden beziehungsweise verbleiben.

In Figur 10 ist eine Ausbildung eines nicht beanspruchten Fügeabschnitts 32 am anderen Ende des Drehstabes 3 gezeigt, welcher ebenfalls durch Materialverdrängung erzielte partielle Erhöhungen 300 aufweist, die mit einer entsprechenden Ausgestaltung der Fügeaufnahme 42 in der Eingangswelle 10 in Verbindung kommen.

Auf das in den Figuren 3 und 5 gezeigte Wälzlager 340 kann auch verzichtet werden, da aufgrund der Ausbildung des Fügeabschnittes 32 und der Fügeaufnahme 42 die notwendige Einpresskraft so gering ist, dass eine mögliche Knickkraft des Drehstabes 3 weit unterschritten wird. Damit lässt sich eine einfache Montage sowie eine Vereinfachung des gesamten Aufbaues erreichen.

Um beim Eintragen eines hohen Drehmomentes mittels des Lenkrads eine Überlastung des Drehstabes 3 beziehungsweise der Verbindung des Drehstabes 3 mit der Eingangswelle 10 und/oder der Ausgangswelle 12 zu verhindern, sind die Eingangswelle 10 und die Ausgangswelle 12 zusätzlich zur drehelastischen Verbindung über den Drehstab 3 bevorzugt über einen losen Formschluss so miteinander verbunden, dass ein Maximalwert für die Relativdrehung der Eingangswelle 10 zur Ausgangswelle 12 und damit auch ein Maximalwert für die Verdrehung des Drehstabes 3 vorgegeben ist.

Entsprechend muss bei der in Figur 4 gezeigten Montage darauf geachtet werden, dass der Drehstab 3 in der Mittelstellung des losen Formschlusses bezüglich des entsprechenden Maximaldrehwinkels gefügt wird. Hierzu wird in einer bevorzugten Ausführungsform ein Zusammenführen zunächst mit einer Spielpassung erreicht, welche beispielsweise durch das Einführen eines ohne die Erhöhungen 300 vorgesehenen Zentrierbereiches 310 des Drehstabes 3 in die Fügeaufnahme 30 ausgebildet wird. Dann wird eine Ausrichtposition dadurch gefunden, dass zur Bestimmung der Mittenposition die Eingangswelle 10 und die Ausgangswelle 12 jeweils bis zu den Endanschlägen in beiden Richtungen verdreht werden und daraus die Mitte gesucht wird. Erst dann, nachdem die Mittenposition gefunden wurde, werden die Eingangswelle 12 und die Ausgangswelle 12 durch einfaches Zusammenpressen in dieser Aurichtposition gefügt, wobei sich der Drehstab 3 dann in dieser Position in die entsprechende Fügeaufnahme 40 beziehungsweise 42 einformt und damit ein Formschluss und ein Reibschluss hergestellt wird.

Figur 11 zeigt einen Querschnitt durch einen Drehstab 3 in einer weiteren Ausbildung. Im Fügeabschnitt 30 des Drehstabs 3 sind durch Materialverdrängung erzielte partielle Erhöhungen 300 vorgesehen, welche sich in Umfangsrichtung des Drehstabes 3 erstrecken. Dies ist exemplarisch auch noch einmal in Figuren 12 und 13 gezeigt, wobei der Fügeabschnitt 30 in Figur 12 mit durch Materialverdrängung erzielten partiellen Erhöhungen 300 versehen ist, welche sich exakt in Umfangsrichtung erstrecken, es sich hierbei also um eine Vielzahl von nebeneinander in Axialrichtung liegenden, durchgehenden Wülsten beziehungsweise Ringen handelt. In Figur 13 sind die durch Materialverdrängung erzielten partiellen Erhöhungen 300 im Fügeabschnitt 30 in Form eines Gewindes aufgebracht.

In Figur 11 ist weiterhin gezeigt, dass der andere Fügeabschnitt 32 des Drehstabes 3 nicht mit Erhöhungen versehen ist, sondern es sich hierbei um einen zylinderförmigen Fügeabschnitt 32 handelt, der beim Fügen einen herkömmlichen Presssitz erzeugt.

In Figur 14 ist eine Fügeaufnahme 40 in einer weiteren Ausbildung gezeigt, welche mit dem Fügeabschnitt 30 zusammenwirkt und in welcher durch Materialverdrängung erzielte partielle Erhöhungen 400 vorgesehen sind, welche sich in die Durchgangsbohrung 410 in der Ausgangswelle 12 hinein erstrecken. Diese durch Materialverdrängung erzielten partiellen Erhöhungen 400 erstrecken sich in Pressrichtung P, also in Axialrichtung der Durchgangsbohrung 410. Entsprechend liegt bei einem Fügen des Drehstabes 3 in die Ausgangswelle 12 wiederum die Situation vor, dass sich die im Fügeabschnitt 30 erstreckenden partiellen Erhöhungen 300 unter einem Winkel und bevorzugt im Wesentlichen senkrecht zu den in der Fügeaufnahme 40 vorliegenden partiellen Erhöhungen 400 erstrecken. Auf diese Weise wird wiederum ein Fügen mit einer geringen Presskraft erreicht, wobei dabei aber dennoch ein guter Kraftschluss und ein guter Formschluss derart erreicht werden, dass eine besonders drehfeste Verbindung vorliegt. Entsprechend kann ebenfalls die benötigte Einpresskraft reduziert werden, so dass ein möglicherweise eingetragenes Knickmoment beziehungsweise eine möglicherweise eingetragene Knickkraft in dem Drehstab 3 unterhalb der kritischen Knickkraft liegt und der Drehstab 3 nicht beschädigt wird.

In Figur 15 ist ein Drehstab 3 in einer weiteren Ausbildung gezeigt, wobei sowohl der Fügeabschnitt 30 mit durch Materialverdrängung erzielten partiellen Erhöhungen 300, als auch der am anderen Ende des Drehstabes 3 liegende Fügeabschnitt 32 mit durch Materialverdrängung erzielten partiellen Erhöhungen 300 versehen ist, wobei die durch Materialverdrängung erzielten partiellen Erhöhungen 300 jeweils in Umfangsrichtung des Drehstabes 3 verlaufen und entsprechend entweder als umlaufende Ringe, Wülste oder Gewinde ausgeprägt sein können.

Der entsprechende Umformvorgang zur Erzeugung der partiellen Erhöhungen 300 wird bevorzugt durch Materialverdrängung wie spanloses Umformen, beispielsweise Prägen, Rändeln oder Rollen durchgeführt.

In Figur 16 ist eine Lenkwelle 1 in einer weiteren Ausbildung gezeigt, welche eine Eingangswelle 10 und eine Ausgangswelle 12 umfasst und welche dazu vorgesehen ist, beispielsweise zusammen mit dem Drehmomentsensor 118' der Figur 1 eingesetzt zu werden. Entsprechend ist an der Ausgangswelle 12 direkt anschließend das Lenkritzel 104 vorgesehen und ein Hilfsdrehmoment wird mittels der Hilfskraftunterstützung 114 direkt auf das Lenkritzel 104 und/oder mittels der Hilfskraftunterstützung 116 direkt auf die Zahnstange 106 aufgebracht. Die in Figur 16 gezeigte Lenkwelle 1 weist intern im Wesentlichen den gleichen Aufbau auf, wie er in den unterschiedlichen Ausführungsformen in den Figuren 2 bis 15 gezeigt ist.

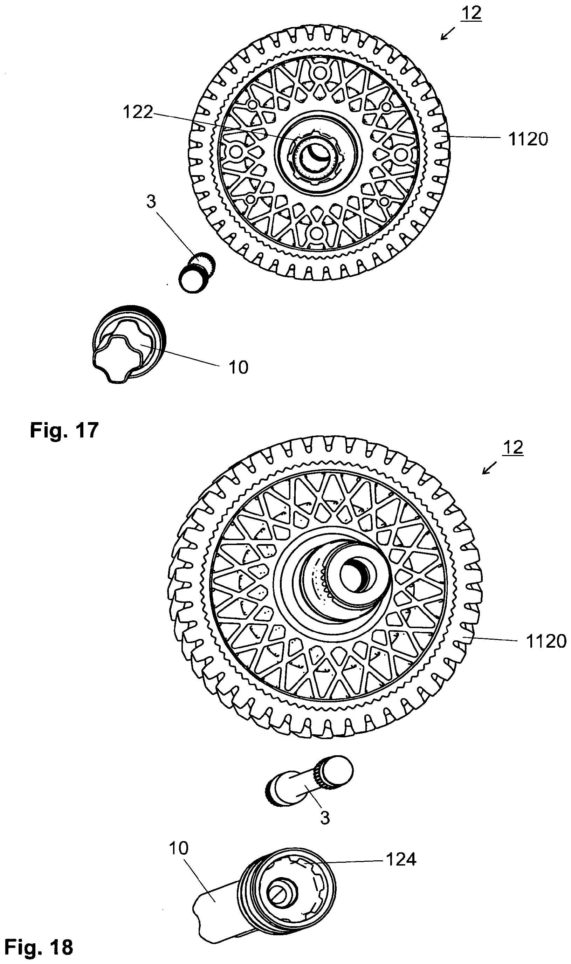

In Figuren 17 und 18 wird schematisch in perspektivischen Darstellungen ein loser Formschluss zwischen der Eingangswelle 10 und der Ausgangswelle 12, die insbesondere das Schneckenzahnrad 1120 aufweist, gezeigt. Hierzu sind an der Ausgangswelle 12 entsprechende Formschlusselemente 122 vorgesehen, welche mit entsprechenden Formschlussaufnahmen 124 der Eingangswelle 10 korrespondieren. Die Formschlussaufnahmen 124 der Eingangswelle 10 sind dabei dimensional größer ausgebildet, als die Formschlusselemente 122, so dass die Formschlusselemente 122 an der Ausgangswelle 12 entsprechend nur unter einem Winkelspiel in die Formschlussaufnahmen 124 der Eingangswelle 10 eingreifen.

Entsprechend kann der Drehstab 3 für eine drehelastische Verbindung zwischen Eingangswelle 10 und Ausgangswelle 12 sorgen. Bei Überschreiten eines maximalen Drehwinkels, welcher durch das Anschlagen einer Formschlussaufnahme 124 an einem Formschlusselement 122 definiert wird, findet aber ein Übertragen eines zusätzlich eingebrachten Drehmomentes ohne weitere Relativverdrehung der Eingangswelle 10 bezüglich der Ausgangswelle 12 statt, so dass auch eine weitere Erhöhung des Hilfsdrehmoments nicht erfolgt.

In Figur 18 ist die in Figur 17 gezeigte Ausbildung in einer schematischen perspektivischen Ansicht aus der anderen Richtung gezeigt. Die Formschlussaufnahmen 124 sind dabei besonders gut zu erkennen, welche mit den Formschlusselementen 122 zusammenwirken.

## Patentansprüche

1. Lenkwelle (1) für eine Kraftfahrzeuglenkung (100) zur Verwendung mit einer Hilfskraftunterstützung (112, 114, 116), umfassend eine Eingangswelle (10) und eine Ausgangswelle (12), welche zur Übertragung eines Drehmoments mittels eines Drehstabs (3) drehelastisch miteinander verbunden sind, wobei ein Fügeabschnitt (30, 32) des Drehstabes (3) mit einer Fügeaufnahme (40, 42) der Eingangswelle (10) und/oder der Ausgangswelle (12) verbunden ist, wobei der Fügeabschnitt (30, 32) des Drehstabs (3) partielle Erhöhungen (300) zur Ausbildung einer kraft- und formschlüssigen Verbindung mit der Fügeaufnahme (40, 42) der Eingangswelle (10) und/oder der Ausgangswelle (12) aufweist,
**dadurch gekennzeichnet, dass** die partiellen Erhöhungen (300) des Fügeabschnitts (30, 32) als durchgehende Ringe oder als durchgehender Gewindegang ausgebildet sind, und dass der Drehstab (3) an seinem der Eingangswelle (10) zugewendeten Ende einen Fügeabschnitt (32) mit partiellen Erhöhungen (300) zur Ausbildung einer kraft- und formschlüssigen Verbindung mit der Fügeaufnahme (42) der Eingangswelle (10), und an seinem der Ausgangswelle (12) zugewendeten Ende einen Fügeabschnitt (30) mit partiellen Erhöhungen (300) zur Ausbildung einer kraft- und formschlüssige Verbindung mit der Fügeaufnahme (40) der Ausgangswelle (12) aufweist, wobei die partiellen Erhöhungen (300) des Fügeabschnitts (30, 32) durch Materialverdrängung erzielt sind und bevorzugt durch spanloses Umformen, besonders bevorzugt durch Rollieren, Rändeln und/oder Prägen, ausgebildet sind.

2. Lenkwelle (1) gemäß Anspruch 1, **dadurch gekennzeichnet, dass** die Fügeaufnahme (40, 42) partielle Erhöhungen (400) aufweist.

3. Lenkwelle (1) gemäß Anspruch 1 oder 2, **dadurch gekennzeichnet, dass** die partiellen Erhöhungen (400) der Fügeaufnahme (40, 42) durch Materialverdrängung erzielt sind und bevorzugt durch spanloses Umformen, besonders bevorzugt durch Rollieren, Rändeln und/oder Prägen, ausgebildet sind.

4. Lenkwelle (1) gemäß Anspruch 2 oder 3, **dadurch gekennzeichnet, dass** die partiellen Erhöhungen (300) des Fügeabschnitts (30, 32) unter einem Winkel bezüglich der partiellen Erhöhungen (400) der Fügeaufnahme (40, 42) verlaufen, und bevorzugt im Wesentlichen senkrecht dazu, bevorzugt im Bereich von +/- 10°, besonders bevorzugt im Bereich von +/-5°, verlaufen.

5. Lenkwelle (1) gemäß einem der Ansprüche 2 bis 4, **dadurch gekennzeichnet, dass** die partiellen Erhöhungen (400) der Fügeaufnahme (40, 42) als durchgehende Wülste und/oder Ringe, als durchgehender Gewindegang oder als sich in Einpressrichtung (P) entlang der Fügeaufnahme (40, 42) durchgehend erstreckende Rippen ausgebildet sind.

6. Lenkwelle (1) gemäß einem der vorstehenden Ansprüche, **dadurch gekennzeichnet, dass** der Drehstab (3) einen glatten Zentrierabschnitt (310) aufweist, der sich an den Fügeabschnitt (30) anschließt, bevorzugt unmittelbar anschließt.

7. Lenkwelle (1) gemäß einem der vorstehenden Ansprüche, **dadurch gekennzeichnet, dass** die Eingangswelle (10) mit der Ausgangswelle (12) zusätzlich über einen losen Formschluss verbunden ist.

## Claims

1. Steering shaft (1) for a motor vehicle steering system (100) for use with a power assistance system (112, 114, 116), said shaft comprising an input shaft (10) and an output shaft (12), which are connected to one another in a torsionally elastic manner by means of a torsion bar (3) in order to transmit a torque, wherein a joining section (30, 32) of the torsion bar (3) is connected to a joining socket (40, 42) of the input shaft (10) and/or the output shaft (12), wherein
the joining section (30, 32) of the torsion bar (3) has partial elevations (300) for forming a nonpositive and positive connection to the joining socket (40, 42) of the input shaft (10) and/or the output shaft (12),
**characterized in that** the partial elevations (300) of the joining section (30, 32) are designed as continuous rings or as a continuous thread, and **in that**, at its end facing the input shaft (10), the torsion bar (3) has a joining section (32) with partial elevations (300) to form a nonpositive and positive connection with the joining socket (42) of the input shaft (10), and, at its end facing the output shaft (12), said torsion bar (3) has a joining section (30) with partial elevations (300) to form a nonpositive and positive connection with the joining socket (40) of the output shaft (12), wherein the partial elevations (300) of the joining section (30, 32) are obtained by displacement of material and are preferably formed by forming without cutting, particularly preferably by roller forming, knurling and/or embossing.

2. Steering shaft (1) according to Claim 1, **characterized in that** the joining socket (40, 42) has partial elevations (400).

3. Steering shaft (1) according to Claim 1 or 2, **characterized in that** the partial elevations (400) of the joining socket (40, 42) are obtained by displacement of material and are preferably formed by forming without cutting, particularly preferably by roller forming, knurling and/or embossing.

4. Steering shaft (1) according to Claim 2 or 3, **characterized in that** the partial elevations (300) of the joining section (30, 32) extend at an angle to the partial elevations (400) of the joining socket (40, 42), and preferably extend substantially perpendicularly thereto, preferably in a range of +/- 10°, particularly preferably in a range of +/- 5°.

5. Steering shaft (1) according to one of Claims 2 to 4, **characterized in that** the partial elevations (400) of the joining socket (40, 42) are designed as continuous beads and/or rings, as a continuous thread or as ribs extending continuously along the joining socket (40, 42) in the press-in direction (P) .

6. Steering shaft (1) according to one of the preceding claims, **characterized in that** the torsion bar (3) has a smooth centering section (310), which adjoins the joining section (30), preferably directly adjoins said section.

7. Steering shaft (1) according to one of the preceding claims, **characterized in that** the input shaft (10) is additionally connected to the output shaft (12) by loose positive engagement.

## Revendications

1. Arbre de direction (1) destiné à une direction de véhicule automobile (100) prévu pour être utilisé avec un système d'assistance (112, 114, 116), comprenant un arbre d'entrée (10) et un arbre de sortie (12) qui sont reliés entre eux de manière élastique en torsion pour transmettre un couple au moyen d'une barre de torsion (3), une partie de jonction (30, 32) de la barre de torsion (3) étant reliée à un logement de jonction (40, 42) de l'arbre d'entrée (10) et/ou de l'arbre de sortie (12), la partie de jonction (30, 32) de la barre de torsion (3) comportant des saillies partielles (300) destinées à établir une liaison en force et par complémentarité de formes avec le logement de jonction (40, 42) de l'arbre d'entrée (10) et/ou de l'arbre de sortie (12),
**caractérisé en ce que** les saillies partielles (300) de la partie de jonction (30, 32) sont réalisées sous la forme d'anneaux continus ou de filetage continu, et **en ce que** la barre de torsion (3) comporte à son extrémité tournée vers l'arbre d'entrée (10) une partie de jonction (32) munie de saillies partielles (300) destinée à établir une liaison en force et par complémentarité de formes avec le logement de jonction (42) de l'arbre d'entrée (10) et à son extrémité tournée vers l'arbre de sortie (12) une partie de jonction (30) munie de saillies partielles (300) destinée à établir une liaison en force et par complémentarité de formes avec le logement de jonction (40) de l'arbre de sortie (12), les saillies partielles (300) de la partie de jonction (30, 32) étant obtenues par déplacement de matière et de préférence par formage plastique, de manière particulièrement préférée par laminage, moletage et/ou matriçage.

2. Arbre de direction (1) selon la revendication 1, **caractérisé en ce que** le logement de jonction (40, 42) comporte des saillies partielles (400).

3. Arbre de direction (1) selon la revendication 1 ou 2, **caractérisé en ce que** les saillies partielles (400) du logement de jonction (40, 42) sont obtenues par déplacement de matière et de préférence par formage plastique, de manière particulièrement préférée par laminage, moletage et/ou matriçage.

4. Arbre de direction (1) selon la revendication 2 ou 3, **caractérisé en ce que** les saillies partielles (300) de la partie de jonction (30, 32) s'étendent en formant un angle par rapport aux saillies partielles (400) du logement de jonction (40, 42), et de préférence sensiblement perpendiculairement à celles-ci, de manière préférée dans la gamme de +/- 10°, de manière particulièrement préférée dans la gamme de +/5°.

5. Arbre de direction (1) selon l'une des revendications 2 à 4, **caractérisé en ce que** les saillies partielles (400) du logement de jonction (40, 42) sont réalisées sous la forme de bourrelets et/ou d'anneaux continus, de filetage continu ou de nervures s'étendant de manière continue le long du logement de jonction (40, 42) dans la direction de pressage (P).

6. Arbre de direction (1) selon l'une des revendications précédentes, **caractérisé en ce que** la barre de torsion (3) comporte une partie de centrage lisse (310) qui jouxte, de préférence immédiatement, la partie de jonction (30).

7. Arbre de direction (1) selon l'une des revendications précédentes, **caractérisé en ce que** l'arbre d'entrée (10) est en outre relié par une liaison par complémentarité de formes lâche à l'arbre de sortie (12).
